# EUROPEAN PATENT APPLICATION

(11) **EP 0 577 008 A2**
(43) Date of publication of application: **05.01.1994**
(21) Application number: 93110087.9
(22) Date of filing: 24.06.1993
(51) Int. Cl.: G11B 23/087

(54) **Recyclable tape cassette**

(30) Priority: 30.06.1992 US 906377
(71) Applicant: SHAPE INC., Biddeford Maine 04005 (US)
(72) Inventor: Lovecky, Craig, Old Orchard Beach, Maine 04064 (US); Lowry, Alan, Caton, Massachusetts 02021 (US); Fitzsimmons, Tyler W., Kennebunkport, Maine 04046 (US)
(74) Representative: von Raffay, Vincenz, Dipl.-Ing.

(57) **Abstract**

A recyclable tape reel which is a one-piece, integrally molded member, including: a lower, planar, continuous flange; a central hub connected to the lower flange; an upper, planar continuous flange attached to the hub; and a reel spring molded integrally of the upper end of the tape reel. A leader clip can be formed separately and assembled on the hub, or can be integrally molded of the hub. The leader clip and reel spring can be formed together as one piece and attached to the hub, or they can be molded together integrally of the hub. The dust door can be removed but the dust door metal spring remains in the cassette. However, the cassette base includes an opening to allow the metal dust door to fall out of the cassette spring. The cassette base includes openings to disengage the leader clip from outside the tape cassette, thereby allowing the tape and leader to be removed from the cassette without opening the cassette. All parts of the cassette, except the dust door spring and tape, are made of the same plastic material which can be recycled as one piece once the tape and dust door spring are removed without opening the tape cassette. The thickness of the cassette walls is less than conventional, but supports are added at the walls to reinforce the cassette. Also, the supports contain radial and vertical movement of the tape reels.

## Description

### BACKGROUND OF THE INVENTION

### Field of the Invention

This invention relates to a tape cassette and, more particularly, to a recyclable videotape cassette having a tape reel with an integral reel spring, tape reel lock, and an improved leader clip, and related methods of assembly, disassembly, and recycling.

### Description of the Related Art

A tape cassette usually includes a cover, a base and a pair of tape reels mounted therebetween for rotation. Also a metal reel spring extends from the cover to normally bias the tape reels toward the base.

Each tape reel usually includes a planar lower flange, a planar upper flange, and a cylindrical hub connecting the two flanges. The lower flange can be a separate member connected to the hub, or can be integrally formed with the hub. However, the upper flange is usually separate and connected to the hub by lugs formed on the hub which pass through holes formed in the upper flange. The lugs are then heat deformed, welded or cam locked to hold the upper flange on the hub.

The hub also usually includes centrally on its top surface a pivot button, again either formed separately or integrally therewith. This pivot button is usually made of a relatively expensive low friction material, such as acetal to minimize friction between the rotating tape reel and metal reel spring.

A leader clip is also attached to the hub for securing a leader of the tape to the hub. The leader clip, like the pivot button, has been made of acetal since styrene has been considered too rough, perhaps damaging the leader. The leaders of the two tape reels are connected to magnetic tape during loading of the cassette.

The fact that this conventional tape cassette includes several parts that must be separately produced and assembled causes relatively expensive manufacturing costs.

There is known a one-piece tape reel including integral upper and lower flange members and an integral pivot button. However, the leader clip is separate and the tape reel is still biased by a separate leaf spring extending from the cover of the cassette.

Tape cassettes almost uniformly also include a multi-piece reel lock. Such multi-piece reel locks include a separate actuator, a pair of separate movable arms for respectively locking the reels, and a separate spring for biasing the arms toward the reels.

Of course, such a multipiece lock is rather expensive to produce and assemble. Further, due to the number of parts and the fabrication requirements for each part, production yields cannot be maximized.

Due to these drawbacks, attempts have been made to make the actuator, reel lock and spring one piece to cut down on manufacturing and assembly costs. However, such a one piece reel lock must still be separately formed and assembled in the tape cassette, which is relatively time consuming and expensive.

There is known instead a non-moving reel lock integral of the tape cassette. This design eliminates all moving parts and assembly of a reel lock. The conventional cassette base mold must be changed, however, to allow formation of numerous ribs or teeth, and the conventional tape reel mold most be changed to allow formation of various teeth or ribs.

Moreover, with cassettes, as with all plastic consumer goods, a need exists to find ways to efficiently recycle, instead of merely depositing them in land fills. However, conventional cassette covers, bases and tape reel hubs are usually made of one type of styrene, the tape reel flanges made of another type of styrene, the pivot button and leader clip made of acetal, the various springs, including the dust door spring and reel leaf spring, of metal, the rollers of acetal and the tape of still another material. To recycle the conventional cassette, screws holding the cassette must be removed or welds broken, the cassette cover and base separated, the metal springs and acetal rollers removed, the tape reels and tape removed and only the cassette cover and base are left to be melted down for re-use. The tape reels are then disassembled to remove the tape. These steps are time consuming and perhaps too expensive to make recycling feasible.

Further, an interest is developing for the use of special pre-recorded video cassettes intended only for a couple of short "plays", such as new car manufacturer promotional tapes sent to a prospective purchaser for only a couple of viewings and no recording. As an example, the length of the tape might allow only 10 minutes of recording/playback, as opposed to a conventional time of 120 minutes. With such promotional video cassettes, a very low cost cassette, resulting from elimination of as many springs, pivots, etc., as possible, is paramount to reduce manufacturing and assembly costs. It is also expected that these promotional cassettes will be forwarded by mail. As a result, it is best to have a tape cassette with a minimum number of parts (which could be rendered non-operational during shipping and handling), and one which is low in weight. However, such a low cost video cassette with acceptable manufacturing and performance characteristics, and low weight is not yet available.

In light of the prior art, a need exists for an efficiently operating tape cassette which is simpler and less expensive to make and to recycle.

### SUMMARY OF THE INVENTION

Accordingly, it is a purpose of the present invention to provide a tape cassette which is easier to manufacture because it requires fewer parts, and fewer assembly and disassembly steps.

It is another purpose of the present invention to provide a tape cassette and related methods of manufacture which are less costly.

It is another purpose of the present invention to provide a tape reel retaining means requiring no assembly of parts into a video cassette or separate biased mounting, and which still prevents despooling of tape.

It is another object of the present invention to provide a recyclable tape cassette wherein most component parts are made of styrene.

It is another purpose of the present invention to provide a tape cassette, wherein all parts thereof, except the tape, and leader dust door spring, are made from the same plastic material that can be recycled to make another tape cassette.

It is another purpose of the present invention to provide a tape reel including an integrally molded reel spring.

It is another purpose of the present invention to provide a positive lock between the dust door, tape reel, and cassette housing to prevent despooling.

It is another purpose of the present invention to provide a tape reel which can be molded in one piece to include a leader clip.

It is another purpose of the present invention to provide a leader clip which expands to hold a leader clip in a recess formed in the hub and which can be easily removed from outside the tape cassette.

Finally, it is a purpose of the present invention to provide a videocassette and method of disassembly thereof which facilitate recycling.

To achieve the foregoing and other objects of the present invention and in accordance with the purposes of the invention there is provided a recyclable tape cassette including a tape reel which is a one-piece, integrally molded member, including: a lower, planar, continuous flange; a central hub connected to the lower flange; and a reel spring molded integrally of the upper end of the tape reel. A leader clip can be formed separately and assembled on the hub, or can be integrally molded of the hub. Alternatively, the leader clip and reel spring can be formed together as one piece and attached to the hub, or they can be molded together integrally of the hub. The dust door cooperates with the tape reels and cassette base and cover to prevent despooling of the tape, when the cassette is not received by the tape player/recorder. The tape cassette base includes an opening to allow removal of the metal dust door spring. The cassette includes other openings to disengage the leader clips from outside the tape cassette, thereby allowing the tape and leader to be removed from the cassette without opening the cassette. Finally, the thickness of the cassette walls is less than conventional, but supports are added at the walls to reinforce the cassette and to assist in preventing despooling of tape.

### BRIEF DESCRIPTION OF THE DRAWINGS

FIG. 1 is a perspective view of a tape cassette according to the present invention.

FIG. 2 is a bottom view of one of the tape reels shown in FIG. 1.

FIG. 2a is a top view of the integral reel spring means shown in FIGS. 1 and 2.

FIG. 3 is a perspective view of a tape reel according to the present invention including an alternate embodiment of the integrally formed reel spring.

FIG. 4 is a side view of the tape reel shown in FIG. 3 positioned between a cassette cover and base.

FIG. 5 is a perspective view of an alternate embodiment of the tape reel according to the present invention.

FIG. 6 is a perspective view of a tape reel lower flange and hub including a leader clip on which is integrally formed a reel spring.

FIG. 7 is a side view of the tape reel shown in FIG. 6 positioned between a cassette cover and base.

FIG. 8 is a perspective view of the separate leader clip and integral spring shown in FIG. 7.

FIG. 9 is a perspective view of a one piece tape reel including a recess for receiving a leader clip.

FIG. 10 is a perspective view of a tape reel according to the present invention having an integrally formed leader clip.

FIG. 11 is a schematic view of a tape cassette according to the present invention including openings through which access to the leader clips can be gained.

FIG. 12 is a schematic view of the tape cassette according to the present invention, and also showing a tool for disengaging the leader clip.

FIG. 13 is a side, cross-sectional view of an alternate embodiment of a leader clip according to the present invention.

FIG. 14 is a top view of a tape reel according to the present invention incorporating the leader clip shown in FIG. 13.

FIG. 15 is close up view of the leader clip shown in FIG. 14 assembled in the tape reel.

FIG. 16 is a top view of a tape reel including an integral reel spring.

FIG. 17 is a top view of an another embodiment of a flange for a tape reel including an integral reel spring.

FIG. 18 is another embodiment of a flange of a tape reel including an integral reel spring.

FIG. 19 is another embodiment of a flange for a tape reel including an integral reel spring.

FIG. 20 is a top view of the tape cassette according to the present invention illustrating reel retaining means.

FIG. 21 is a side, cross-sectional view, of one of the reel retaining means engaged with a tape reel lower flange, when the dust door is in a first, closed position.

FIG. 22 is a side, cross-sectional view of one of the reel retaining means disengaged from the tape reel lower flange, when the dust door is in a second, open position.

FIG. 23 is a perspective view of an alternate embodiment of the tape cassette according to the present invention.

FIGS. 24-26 are side, cross-sectional views of the tape reel retaining means of the videocassette shown in FIG. 23.

FIG. 27 is a top view of a tape cassette base according to the present invention.

FIG. 28 is a top view of a tape cassette cover according to the present invention.

FIG. 29 is a side, cross-sectional view taken along line 29-29 of FIG. 27.

FIG. 30 is a side, cross-sectional view taken along line 30-30 of FIG. 27.

### DETAILED DESCRIPTION OF THE PREFERRED EMBODIMENTS

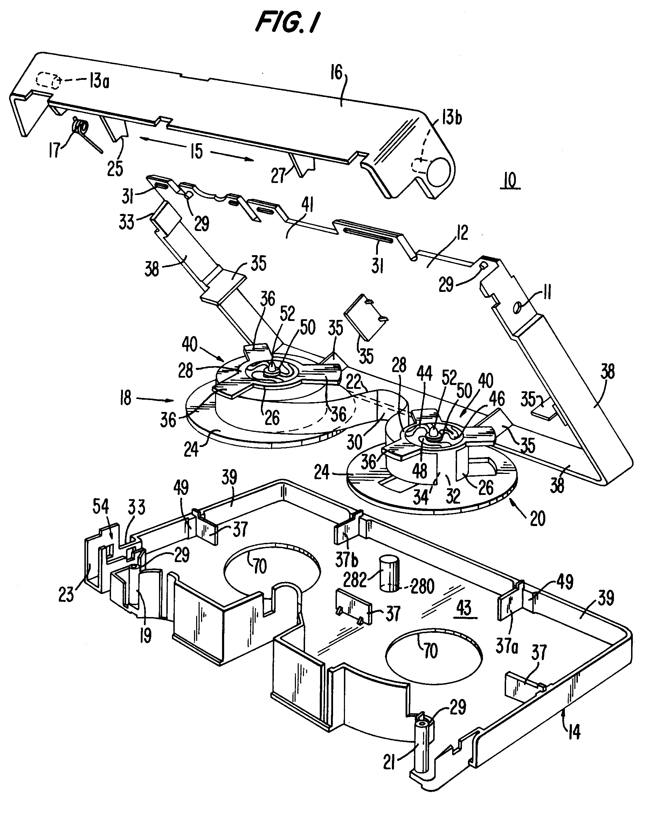

The preferred embodiments according to the present invention will now be described with reference to FIGS. 1-22.

With reference to FIG. 1, a recyclable tape cassette according to the present invention is generally indicated by reference numeral 10 and includes a cover 12, a base 14 and a dust door 16 pivotally connected between the cover 12 and base 14 by a spring 17 loaded against the cover 12. As can be seen in FIG. 1, this cassette 10 preferably does not use windows like conventional cassettes.

The present invention can use reel retaining means 15 in the form of integral tape reel locks 25, 27, as described below. Preferably, however, the tape cassette uses a cam formed on the dust door, in cooperation with ribs/supports formed on the tape reel/cassette to restrain movement of the tape reels and thereby prevent despooling, as described below.

Preferably there are no separate rollers, such as metal or acetal rollers, in this cassette 10. Instead, guide posts 19, 21 are integrally molded on the cassette base 14 from styrene.

Preferably no dust door latch is provided. The dust door 16 operates conventionally, but is just not locked in the closed position.

No pressure flaps like those of the prior art are contemplated for use in the preferred embodiment of this cassette 10.

The cassette cover 12 and base 14 can be connected by welding as is conventional, and more particularly by male/female plastic connections 29 and/or by ribs 31 and welding or otherwise adhering, and/or by screws.

The front left corner of the cassette includes an opening 23 adjacent the dust door spring 17. When the dust door 16 is removed as described below, without opening the cassette 10, the spring 23 can exit the opening 23 so that no metal remains in the cassette 10.

Two tape reels 18, 20 are received between the cover 12 and base 14. At least the cover 12, base 14, and tape reels 18, 20 are preferably made of one type of plastic, e.g., styrene.

Each tape reel 18, 20 includes a lower flange 24, a hollow hub 26 and an upper flange 28. The upper flange 28 is not absolutely necessary. However, it prevents the tape from telescoping if the cassette 10 is dropped. In this embodiment, the upper flange 28 includes three equally spaced projecting planar ears 36. The ears 36 can be of different length, width or number.

The flanges 24, 28 may be formed integrally with the hub 26, or may be formed separately and attached to the hub 26.

A leader 30 (one shown in FIG. 1) is connected to each hub 26 via a leader clip 32, which is received in a recess 34 formed in the outer circumference of the hub 26. Tape 22 is attached to the free end of each leader 30.

In the embodiment shown in FIG. 1, the leader clip 32 and upper flange 28 and an integral reel spring means 40 discussed below are formed as one piece and connected to the hub 26. Alternatively, a conventional, separate leader could be used with a tape reel 20 including an integral reel spring means 40 and upper flange 28.

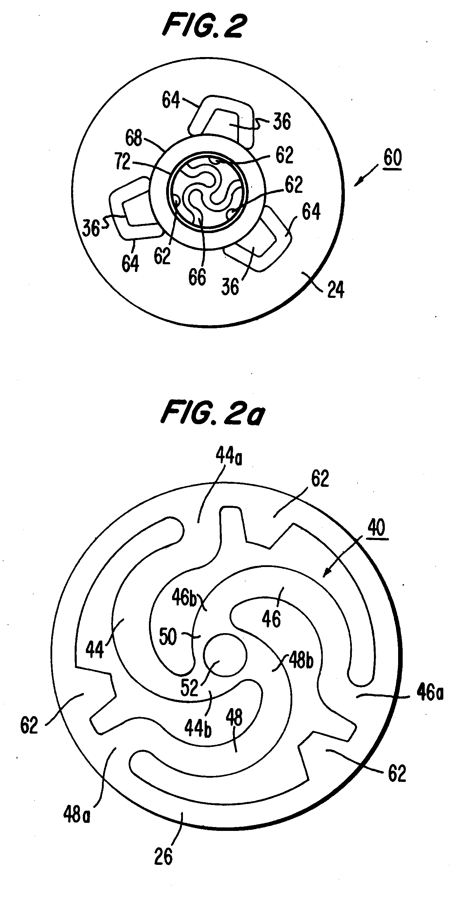

As shown in FIGS. 1, 2 and 2a, on top of the upper flange 28 there is formed integrally by injection molding the reel spring means 40. In this embodiment, a coil spring 42 is formed including three curved arms, 44, 46, 48, one end 44a, 46a and 48a of each arm being connected to the inner circumference of the hub 26, and an opposite end 44b, 46b and 48b of each arm being connected to a central member 50.

A pivot button 52 is integrally molded on the central member 50. It is preferable that the tape reel mold be gated close to the top of the pivot button 52, but not top dead center because a vestige caused by molding at top dead center might deleteriously effect operation of the pivot button 52. Alternatively, the mold could be gated on the back side of the button 52 using the hollow hub 26.

The cassette base 14 and cover 12 also include various supports 35, 37, respectively, abutting the outer walls 38, 39. These supports 35, 37 are necessary because the cassette walls 38, 39 and planar area 41, 43 thickness is reduced about one-half relative to conventional cassette wall and planar area thickness to save on weight to reduce mailing costs, and help reinforce the thinner cassette 10 to withstand shipping, dropping, etc. Each intersection of a support 35, 37b and respective outer walls 38, 39 includes a pad or reinforcement 49 which is the same thickness as the conventional cassette wall. The reinforcements 49 help prevent molding imperfections (e.g. sink marks) at the interfaces of the thinned supports 35, 37 and thinned outer walls 38, 39

Several of the supports also serve the purpose of cooperating with the reel retaining means 15 to hold the tape reels 18, 20 against rotation, as described below.

FIG. 2 is a bottom view of the tape reel 18 shown in FIG. 1. As can be seen, the bottom 60 includes three spaced ribs 62 formed on the hub inner circumference 66 for cooperating with a finned spindle of an external tape player/recorder (not shown). The conventional cassette usually includes nine ribs. By eliminating some of the ribs, the function is preserved, but the mold is simplified, less plastic is used, and more room is made available to mold the integral spring means 40. In this regard, the ribs 62 are preferably circumferentially offset from where the integral spring means connects to the hub 26, as best shown in FIG. 14, to facilitate molding of both the ribs 62 and integral spring means 40. Alternatively, of course, each rib 62 could be formed at each connection of the reel spring means 40 to the hub 26.

The lower flange 24 can be a solid member or have spaced openings 64. The ears 36 can also be seen in FIG. 2. The bottom 60 also includes an outer ring 68 which fits within one of the two openings 70 formed in the cassette base 14, and a ring 72 which is inwardly beveled to facilitate receipt of the spindle.

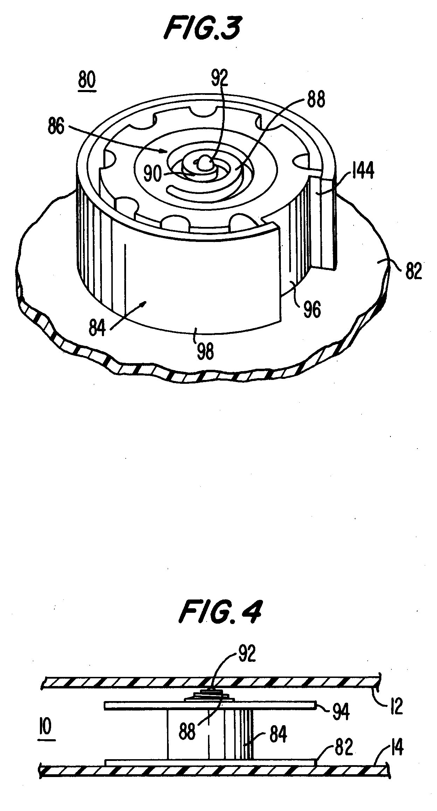

FIG. 3 is a perspective view of a tape reel 80 according to another embodiment of the present invention. As can be seen this tape reel 80 includes a lower flange 82 and a hollow hub 84. The upper portion of the hub 84 includes integral reel spring means 86 in the form of a coil 88 which extends upwardly from a relatively outer portion of the upper area of the hub 84 to a central axis of the hub 84. The coil 88 at a free end terminus 90 includes an integrally formed pivot button 92. An upper flange 94 (see FIG. 4), if desired, may be attached to the hub 84 in a conventional manner, such as through ultrasonic welding. Also shown is a recess 96 formed in the outer circumference 98 of the hub 84 which receives a leader clip as described below. The bottom of the tape reel 80 according to this embodiment, and those that are described below, are similar to that shown in FIG. 2.

FIG. 4 is a side view of the tape reel 80 shown in FIG. 3 loaded between the tape cassette cover 12 and base 14. As can be seen, the coil reel spring 88 is compressed when assembled in the tape cassette 10 between the cover 12 and base 14, since the distance between the tip of the pivot button 92 and the bottom of the lower flange 82, in the non-loaded state, is greater than the distance between the inner surfaces of the cover 12 and base 14 when same are mated. Due to this compression, the coil spring 88 normally urges the tape reel 80 in a direction from the cover 12 towards the base 14.

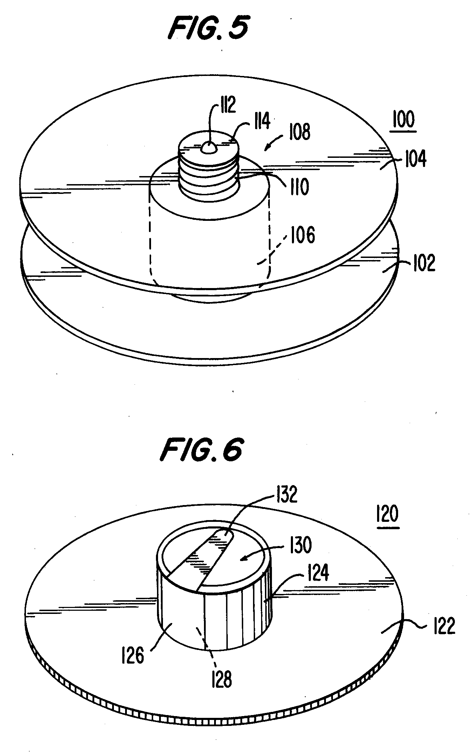

FIG. 5 is another embodiment of a tape reel 100 according to the present invention. This tape reel 100 includes a lower flange 102, an upper flange 104, and a hub 106, on the upper surface of which is formed integral reel spring means 108. The spring means 108 is in the form of a coiled, columnar integral reel spring 110 having a pivot button 112 integrally molded centrally on a flat upper portion 114 thereof.

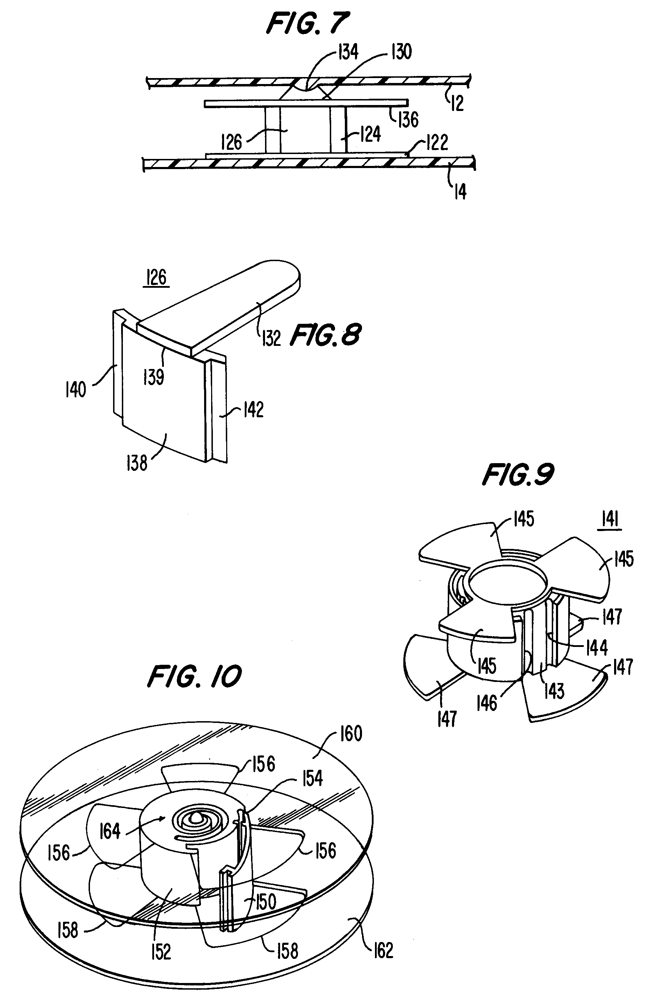

FIG. 6 is a perspective view of another embodiment of a tape reel 120 according to the present invention. In this embodiment, a lower flange 122 is connected to the hub 124. The upper flange 136 is shown in FIG. 7. The upper flange 136 may be attached to the hub in a conventional manner such as by ultrasonic welding. A leader clip 126 is attached to a recess 128 formed in the side of the hub 124 like that shown in FIG. 3. The leader clip 126 may be formed separately from the hub 124, or formed integrally with the hub 124 via a living hinge 154, as shown in FIG. 10 and described more fully below. Further, reel spring means 130 in the form of a leaf spring 132 is formed integrally of the leader clip 126.

Thus in comparison with FIG. 1, wherein the leader clip 32, upper flange 28 and integral reel spring means 40 are formed as one piece, in the embodiment shown in FIG. 6, the leader clip 126 and integral reel spring means 130 are formed as one piece and the upper flange 138, if one is used, can be formed separately and attached to the hub 124. The one piece leader clip 126/reel spring means 130 combination shown in FIG. 6 is preferably made of styrene.

FIG. 7 illustrates the tape reel 120 shown in FIG. 6 positioned between the cassette cover 12 and base 14. The cover 12 in this embodiment includes a pivot button 134 formed integrally thereof. In this way, styrene abuts styrene so friction is low during tape reel rotation; acetal is not necessary as when a metal reel leaf spring of the prior art abuts a pivot button on a rotating tape reel. However, acetal could still be used because it exhibits better spring properties, i.e. good spring retention under stress, than styrene if only a single biasing connection is used between the spring and leader clip. This is in contrast to the multi (three leg) biasing connection spring shown in, e.g. FIGS. 1 and 2, which could be made of styrene.

FIG. 8 illustrates the leader clip 126 shown in FIGS. 6 and 7 in greater detail. The leader clip 126 includes a generally rectangular member 138 which has the same radius as the hub 124. The leaf spring 132 is integrally formed by injection molding at the upper edge 139 of the rectangular member 138. Opposite sides of the leader clip include projections 140, 142 which fit within corresponding linear depressions 144, 146 formed in the hub (see FIG. 9).

FIG. 9 shows a one piece tape reel 141 which includes a recess 143 having the side depressions 144, 146 for receiving the leader clip 126 shown in FIGS. 6-8. This tape reel 141 includes three upper ears 145 and three lower ears 147 which are respectively offset.

FIG. 10 illustrates a tape reel 148 having a leader clip 150 integrally formed of a hub 152 according to the present invention. A linear living hinge 154 is formed between one of the sides of the leader clip 150 and the hub 154. Openings 156 are formed in the upper flange 160. Corresponding openings 158 formed in the lower flange 162 allow access to the leader clip 150, as discussed more fully below, for the purpose of removing the leader after the base 14 and cover 12 are mated. Finally, reel spring means 164 like that shown in FIG. 3, is integrally formed on the upper portion of the hub 152.

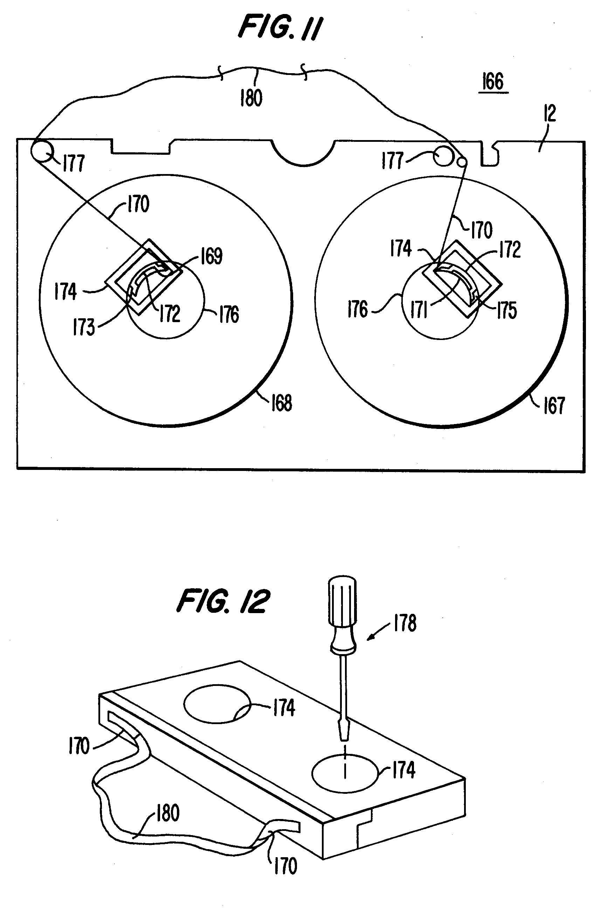

FIG. 11 is a schematic view of an alternate embodiment of a tape cassette 166 according to the present invention with the dust door removed. As can be seen, each tape reel 167, 168 receives an end 169, 171 of a leader 170 via a removable leader clip 172 engaged in a recess 173, 175 of the respective tape reels. The leader clip 172 can be separate or integrally formed of the hub 176 as described herein. In either case, the leader clip 172 can be disengaged from the hub 176 from the outside of the cassette 166. In this regard, an opening 174 in the cassette 166 adjacent each hub 176 allows access to the leader clip 172 from the outside of the cassette 10 without having to open the cassette 10. Preferably, any holes 174 for access to the leader clip are formed in the cassette base to maintain the aesthetics of the cover of the cassette.

If a metal dust door spring such as the spring 17 shown in FIG. 1 is used, the dust door 16 and spring 17 should be removed prior to removing the leader clips 172. With reference to FIG. 1, the door 16 is flexed to remove boss 13b from hole 11 and the door 16 is pulled to the left, thereby removing the boss 13a from an opening 33 formed between walls of the cover 12 and base 14. The spring 17 is stripped from the boss 13a by the cassette base outer wall and falls inside a walled-in area 54 formed by the cover 12 and base 14. The spring 17 can then exit the front of the area 54 via the opening 23 formed at the front of the cassette. The dust door 16 and spring 17 can then be recycled.

To line up the leader clips 172 with the openings 174 for removal of the clips 172, the tape and leader 170 are pulled all the way out. This causes the tape reels 167, 168 to rotate to a stop. The leader clips 172 always end up at the same place, which determines where the openings 174 are formed originally.

As shown schematically in FIG. 12, a tool 178, like a flat head screw driver can then be used to disengage the leader clips 172 from recesses 173, 175 formed in the hubs 176, thereby allowing the tape 180 and leaders 170 to be removed from the cassette 10 all at one time. Once the tape 180 and leaders 170 are removed, the remainder of the tape cassette 10, which is all styrene, can be melted down and reused.

As can be seen, a tape cassette made according to the present invention can be used by the consumer, returned, the dust door and dust door spring removed, the leader clips disengaged from the outside, the leaders and tape removed, without opening the cassette, and the remaining cassette, which is entirely styrene, recycled.

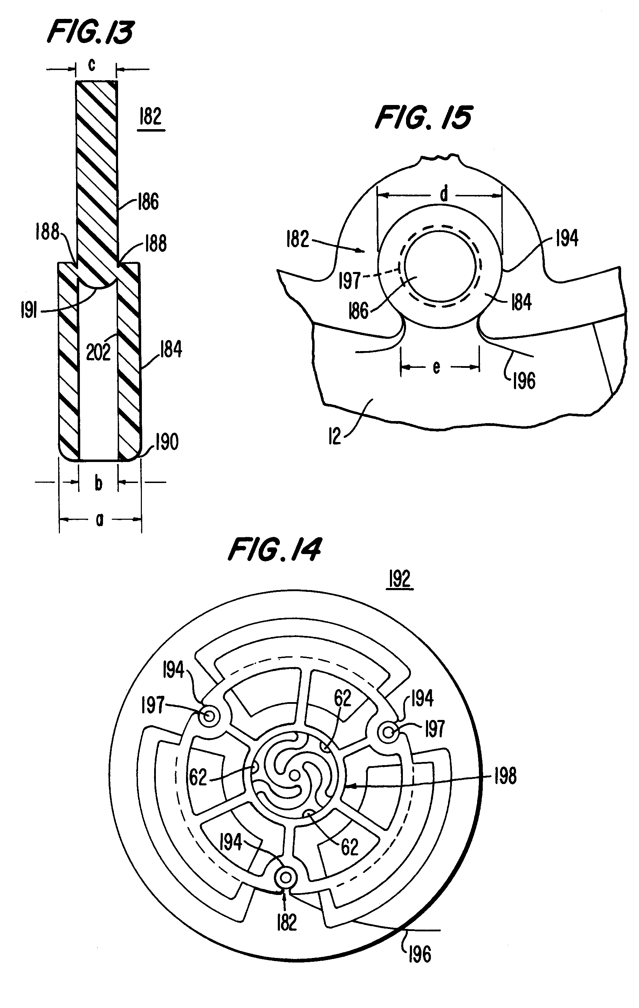

Still another embodiment of the leader clip is shown in FIGS. 13-15. Again this leader clip 182 is preferably made of styrene. This leader clip 182 is a cylindrical member including a first hollow lower cylindrical portion 184 having an outer diameter "a" of about .201 inch and an inner diameter "b" of about 0.93 inch, and a second upper cylindrical portion 186 connected to the first portion by a molded bridge 188. The second portion has an outer diameter "c" of about .100 inch. The bottom edge 190 of the lower portion 184 is bevelled to facilitate insertion thereof into a recess 194 formed in the hub as described below. The bottom edge 191 of the upper portion 186 is rounded to facilitate movement of the upper portion 186 into the lower portion 184 as described below.

FIG. 14 is the top view of a tape reel 192 according to the present invention including the leader clip 182 shown in FIG. 13. The tape reel 192 includes an integral reel spring means 198 similar to that shown in FIG. 1. In this tape reel 192, there are three circumferentially spaced recesses 194, each of which could receive a leader clip 182. This provides flexibility during manufacturing of the cassette 10 since any one of the three recesses 194 can be used for applying a leader 196 via the leader clip 182.

FIG. 15 is a top view of the leader clip 182 installed in the recess 194 with the leader 196 therebetween. The diameter "d" of the recess 194 is about .2055 inch, slightly larger than the outer diameter "a" of the lower portion 184 of the leader clip 182. The diameter "d" is greater than the distance "e" at the opening of the recess 194 to prevent the leader clip 182 from leaving the recess 194.

To apply leader to the tape reel according to this embodiment, with the tape reel out of the tape cassette, a leader 196 is blown sideways by air into one of the recesses 194 and the lower portion 184 of the leader clip 182 (with the upper portion 186 connected thereto via the bridge 188) is placed in the recess 194 and supported from below. The leader 196 is loosely retained between the recess 194 and the outer diameter of the lower portion 184. There is enough space between the diameter "d" of the recess 194 and the outer diameter "a" of the first portion 184 of the leader clip 182 so as not to crimp the leader 196. The upper portion 186 of the leader clip 182 is then forced into the hollow 202 of the lower portion 184 of the leader clip 182, which breaks the bridge 188. The base 190 of the lower portion 184 is supported at this time so that the lower portion does not move.

Since the outer diameter "c" of the upper portion 186 is greater than the inner diameter "b" of the lower portion 184, forcing the upper portion 186 into the lower portion 184 expands the lower portion 184 so that it securely pushes against the recess 194 with the leader 196 therebetween.

Of course, like the leader clips 172 described above, the leader clip 182 can be disengaged from the outside of the cassette using a tool 178, in this case configured as a punch. In this regard, the cassette can include knot sensitive areas or knock outs 197 which would be opposite the openings 174, but would not be seen from the outside of the cassette. Again, if the leader 196 is pulled all the way out, the reel rotates to a predetermined position, a position which determines where the knock outs 197 are formed. The punch 178 is then pushed through the hole 174 and against the upper portion 186, which pushes the upper portion through the knock out 197 and out of the cassette. The leaders 196 can be pulled out of the cassette with all tape. The lower portion can remain in the cassette for recycling since it is also made of styrene.

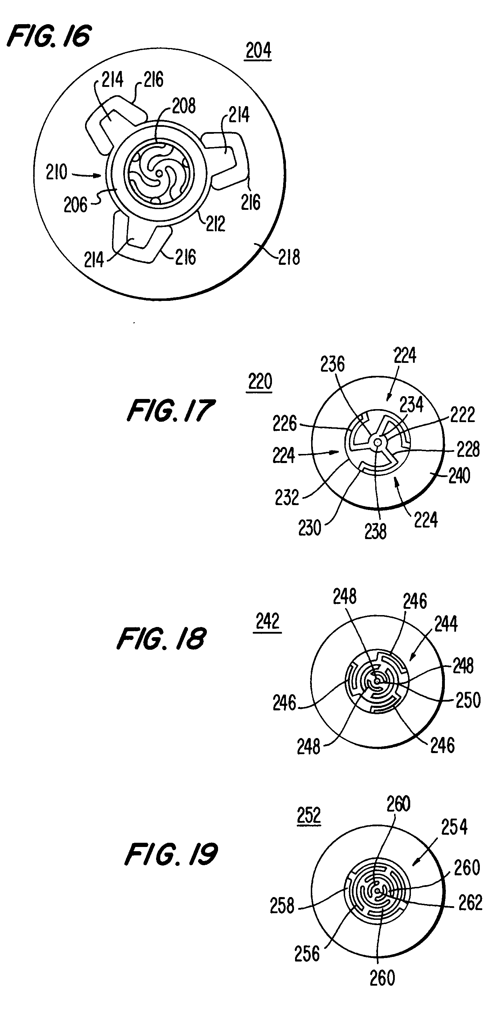

FIG. 16 shows a top view of still another embodiment of a tape reel 204. In this embodiment, there is a space 206 formed between an inner hub 208, on which the reel spring means 210 is formed, and an outer hub 212 from which extend three ears 214, and to which the tape (not shown) is wound. Spaces 216 are formed in the lower flange 218 below the ears 214 to facilitate molding of the ears 214.

FIG. 17 is a top view of a tape reel flange 220 according to another embodiment of the present invention. In this embodiment, the integral reel spring means 222 is in the form of three arms 224, each having a curved element 226 and a straight element 228. One end 230 of each curved element 226 is attached to an inner circumference 232 of a flange 240, and an end 234 of each straight element 228 combines with the other ends 234 of the straight elements 228 to form a common circular terminus 236 with a pivot button 238 formed thereon.

FIG. 18 is the top view of another embodiment of a tape reel flange 242. In this embodiment, the integral reel spring means 244 is in the form of three curved arms 246 which attach to three concentric circular members 248, each connected at two opposing points. The innermost circular member 248 includes a pivot button 250 formed thereon.

FIG. 19 is another embodiment of a tape reel flange 252 according to the present invention. In this embodiment, the integral reel spring means 254 includes a first circular member 256 attached to an inner circumference 258 at two points and three successively concentric inner circular members 260, again each connected to the others at two points. The innermost circular member 260 includes a pivot button 262.

As shown in FIGS. 1 and 20-22, the tape cassette according to the present invention has a dust door 16 with tape reel retaining means 15 in the form of, e.g, a pair of projections 25, 27. The projections 25, 27 are preferably formed integrally of the dust door 16 during molding thereof. Each projection 25, 27 is a planar member connected to the dust door upper wall 264 and front wall 266, and extends at an angle thereto.

Each projection 25, 27 can have an indented edge 268 to facilitate cooperation with the tape reel lower flange 270 outer periphery as described below.

Openings 272, 274, formed at the front edge 276 of the cover 12, are linear and receive the projections 25, 27, respectively, when the dust door 16 is moving between the first, closed position and the second, open position.

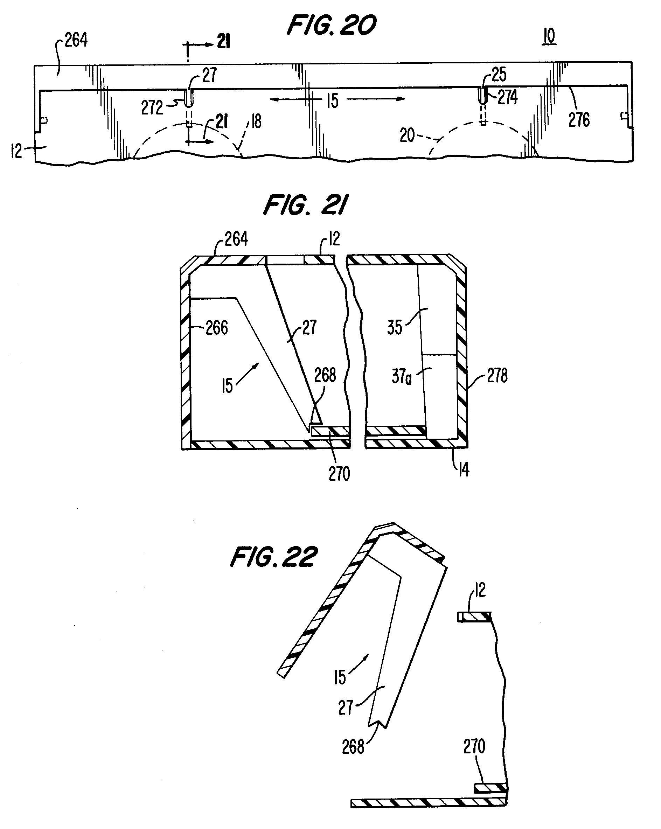

FIG. 21 is a side cross-sectional view of the projection 27 against the circumferential periphery of the tape reel lower flange 270, when the dust door 16 is in the first, closed position.

The first, closed position of the dust door 16 illustrated by FIGS. 20, 21 is characteristic of when the tape cassette 10 is not being operated by the tape player/recorder, e.g., during shipping, handling, storage, etc. In this position, the reel locking means 15 reliably keeps the tape reels 18, 20 from rotating, thereby preventing despooling.

As known in the art, tape reels float to some extent to compensate for the differing tolerances of various tape player/recorders/spindles. Due to this floating, when the projections 25, 27 abut the tape reels 18, 20, the tape reels 18, 20 are moved away from the dust door 16 toward the back end 278 of the cassette 10. To ensure that the tape reels 18, 20 do not move about freely, two of the supports, 37a and 37b, stop backward movement of the tape reels 18, 20. In this way, the tape reels 18, 20 are locked between the projections 25, 27 and the supports 37a, 37b.

In contrast, when the tape cassette 10 is loaded in a tape player/recorder (not shown) the player/recorder moves the dust door 16 from the first, closed position to the second, open position against the force of the dust door spring 17. In this regard, operation of the dust door 16 is the same as with a conventional, biased, pivoting dust door.

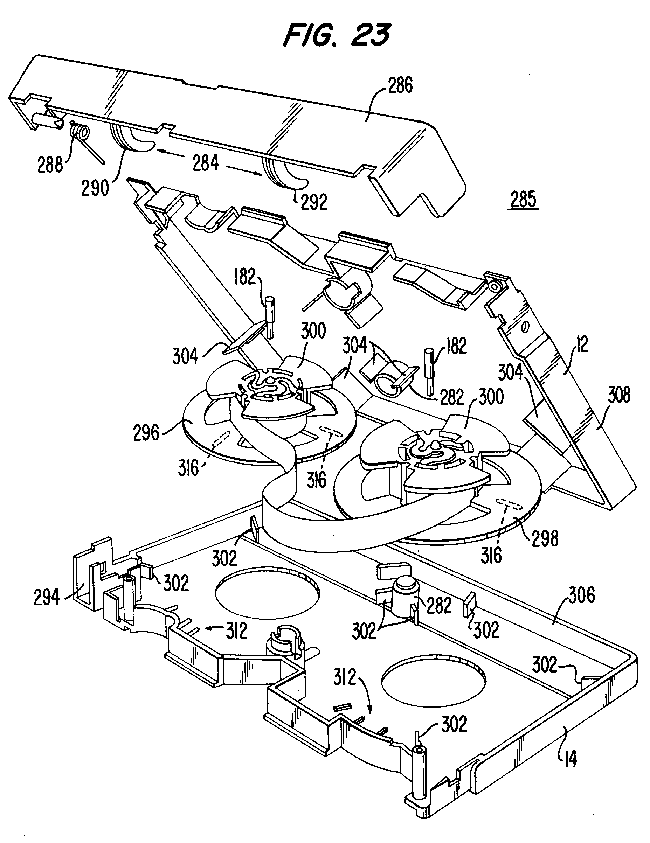

As shown in FIG. 22, as the dust door 16 is opened, the projection 27 disengages from the periphery of the tape reel lower flange 270, which allows the tape reels 18, 20 to freely rotate for feeding the tape through the tape player/recorder.

Each of the lower flanges 270 of the tape reels 18, 20, respectively, can include a plurality of teeth (not shown) formed circumferentially thereon. The teeth can cooperate with the projections 25, 27.

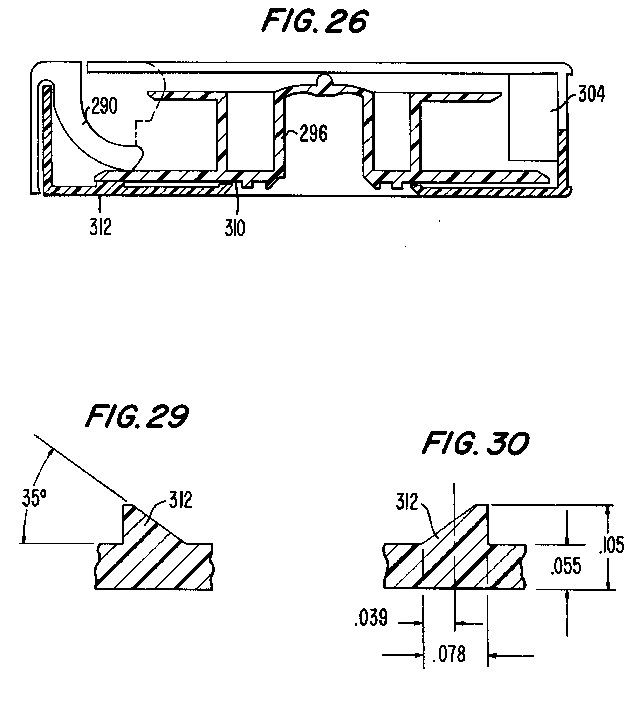

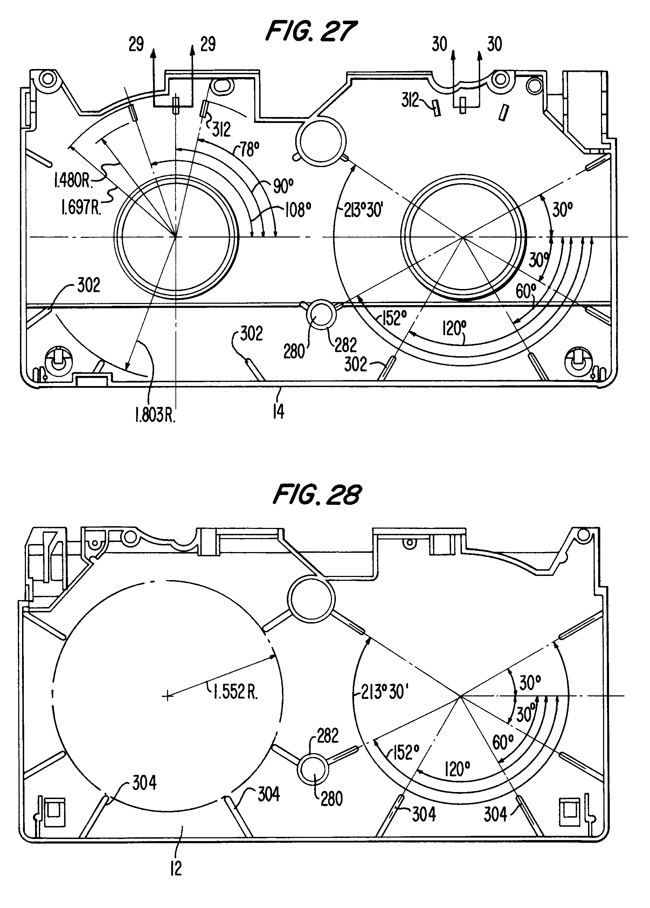

With reference to FIGS. 23-30, a tape reel retaining means 15 according to an alternate embodiment is generally indicated by reference numeral 284. The reel retaining means 284 is in the form of integral tape reel cams 290, 292. In this embodiment a dust door 286 is pivotally connected between the cover 12 and base 14 by a spring 288 loaded against the cover 12 of the cassette 285.

The front left corner of the cassette 285 again includes an opening 294 adjacent the dust door spring 288. When the dust door 286 is removed as described above, without opening the cassette 285, the spring 288 can exit the opening 294 so that no metal remains in the cassette 285, thereby facilitating recycling.

Two tape reels 296, 298 are received between the cover 12 and base 14. At least the cover 12, base 14, and tape reels 296, 298 are preferably again made of one type of plastic, e.g., styrene.

On top of each tape reel 296, 298, there is formed integrally by injection molding reel spring means 300, such as shown in FIGS. 1 and 2.

The cassette base 14 and cover 12 also include various supports 302, 304, respectively, abutting the outer walls 306, 308. These supports serve to reinforce the thinner cassette. The supports 304 also cooperate with the reel retaining means 284 to hold the tape reels 296, 298 against rotation, as described below.

The supports 302 partially underlie the support 304; the ribs 304 extending farther radially inward than the supports 302. In this regard, the supports 304 are radially inward of the tape reel flange outer periphery. The base supports 302 can limit movement of the tape reel horizontally, whereas the supports 304 limit movement vertically, as discussed below.

The cams 290, 292 are preferably formed integrally of the dust door 286 during molding thereof. Each cam 290, 292 is a radiused leg connected to the dust door 286 and extending inwardly therefrom.

No openings are needed at the front edge of the cover 12 to receive the cams 290, 292, unlike the embodiment described above in relation to FIGS. 20-22. The curved nature of the cams 290, 292 eliminates the need to pass through the cover 12. This further enhances cassette aesthetics and eliminates dust entry.

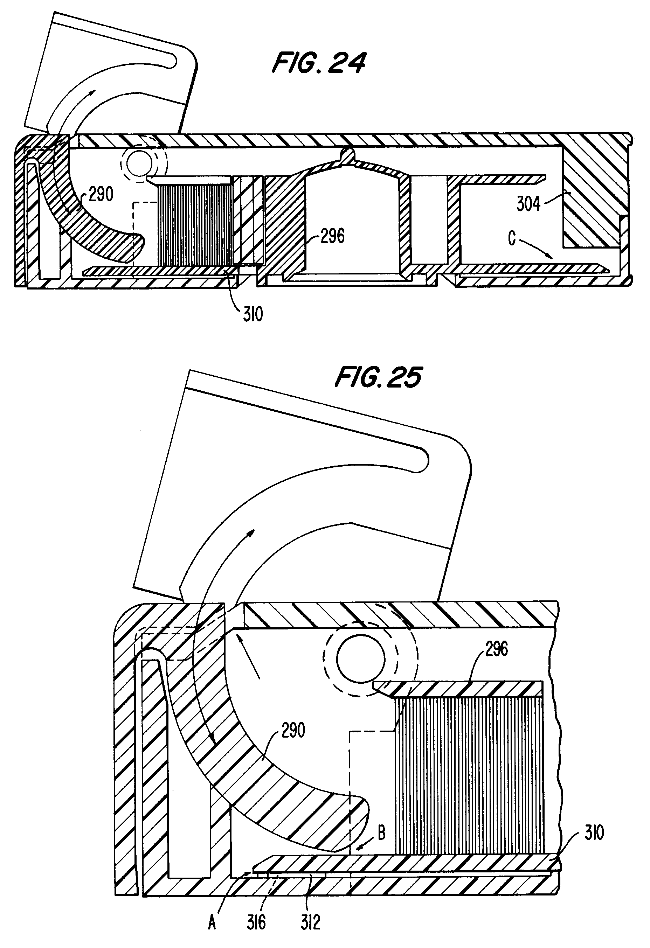

FIGS. 24-26 are side cross-sectional views of a cam 290 adjacent and above the circumferential periphery of the tape reel lower flange 310, when the dust door 286 is in the first, closed position.

The first, closed position of the dust door 286 illustrated by FIGS. 24-26 is characteristic of when the tape cassette 10 is not being operated by the tape player/recorder, e.g., during shipping, handling, storage, etc. In this position, the reel retaining means 284 reliably prevents the tape reels 296, 298 from rotating, thereby preventing despooling, as described below.

As stated above, tape reels float to some extent. When the cams 290, 292 are adjacent the tape reels 296, 298, (FIG. 3) they define a space for vertical movement at one end. At the other end, the vertical walls 304 define a space in which vertical movement is limited. In this way, the tape reels 296, 298 are retained vertically between the cams, the supports 304 and the cassette base 14. Also, the integral spring means on the tape reel does not always have to bear full pressure, since upward spring compressing movement is checked. Therefore, spring life can be extended.

As for rotational retention, the cassette base 14 includes a plurality of unidirectional ribs 312 (see FIGS. 29, 30) . The bottom flange 314 of each tape reel 296, 298 also includes a plurality of unidirectional ribs 316, like those in FIGS. 29, 30. The ribs 312, 316 are each a distance "A" high. The distance between the bottom of the cam 290 and the top of the lower flange 310 is a distance "B" which is less than two times the distance "A". In this way, the cam 290 prevents the tape reel 310 from moving so that one rib 316 cannot jump another rib 312.

In contrast, when the tape cassette 10 is loaded in a tape player/recorder (not shown) the player/recorder moves the dust door 286 from the first, closed position to the second, open position against the force of the dust door spring 288. In this regard, operation of the dust door 286 is the same as with a conventional, biased, pivoting dust door.

As shown in FIG. 24, as the dust door 286 is opened, the cam 290 is removed from the periphery of the tape reel 310 lower flange, which allows the tape reels 296, 298 to freely rotate in space "C" for feeding the tape through the tape player/recorder.

A significant benefit of this invention over the prior art is that the various walls/receptacles usually required at the rear, central area of the cassette, and the related movable, multipiece reel lock, or even a one piece tape reel, are no longer necessary. This minimizes mold design and saves raw materials. It is noted, however, that due to industry standards for a movable reel lock, an opening 280 (FIG. 1) is still formed at the rear of the cassette base to allow a pin of the tape player/recorder, conventionally used to actuate a reel lock, free movement. The opening 280, however, is covered by a cylindrical member 282 to prevent the pin from catching the tape which may cross the path of the opening 280.

Further, by incorporating the reel retaining means into a conventional dust door, tape reel and cassette cover and base the overall number of parts of the cassette is reduced, there is no need to change in any way the standards set for the cassette or the tape player/recorder design, assembly is facilitated because, particularly, spring loading of a reel lock is eliminated, and operation is more reliable because there are no cooperating moving parts, like spring biased arms.

The above described tape reel has been shown to be of the type intended for use in videotape recorders. However, the invention can be similarly applied to tape reels for use in audio or other recording and/or reproducing apparatus.

## Claims

1. A tape cassette, comprising:
a cover;
a base mated to the cover; and
a tape reel received between the base and the cover, including--
a hub for receiving tape therearound;
at least one planar flange connected to the hub; and
spring means integrally formed on the tape reel, said spring means being capable of biasing the tape reel within the tape cassette.

2. The tape cassette as recited in claim 1, further comprising:
means formed on the hub for receiving a leader clip, and
a leader clip formed separately from the tape reel for cooperating with the means for receiving the leader clip.

3. The tape cassette as recited in claim 2, further comprising:
a second planar flange formed as one piece with the leader clip,
wherein said second flange is connected to the hub when the leader clip is received by the means for receiving the leader clip.

4. The tape cassette as recited in claim 1, wherein the spring means is a coil spring.

5. The tape cassette as recited in claim 2, wherein the spring means is a leaf spring.

6. The tape cassette as recited in claim 1, further comprising:
means formed on the hub for receiving a leader clip; and
a leader clip integrally formed on a side of the hub to be pivotably movable relative to the hub by a living hinge.

7. The tape reel as recited in claim 6, wherein the spring means is integrally formed on the leader clip.

8. The tape cassette as recited in claim 7, wherein the spring means is a leaf spring.

9. The tape cassette as recited in claim 5, further comprising:
a pivot button formed integrally on the cover acting as a point of contact between the leaf spring and the tape cassette cover.

10. The tape cassette as recited in claim 8, further comprising:
a pivot button formed integrally on the cover acting as a point of contact between the leaf spring and the tape cassette cover.

11. The tape cassette as recited in claim 1, further comprising:
a pivot button formed integrally on the spring means acting as a point of contact between the spring means and the tape cassette cover.

12. The tape cassette as recited in claims 2 or 6, further comprising:
an opening in the tape cassette for gaining access to the leader clip from the outside of the tape cassette and for removing the leader clip from the means for removing the leader clip without opening the tape cassette.

13. The tape cassette as recited in claim 1, further comprising:
perpendicular supports formed on the base and cover.

14. The tape cassette as recited in claim 1, further comprising:
a dust door pivotable between a first, closed position and a second, open position; and
means, formed on the dust door for cooperating with the tape reel and tape cassette for preventing rotation of the tape reel, when the tape cassette is not received by the tape player/recorder.

15. The tape cassette as recited in claim 14, wherein the means for preventing rotation comprises:
a projection formed inwardly on the dust door;
wherein the at least one planar flange receives the projection when the dust door is in the second, closed position.

16. The tape cassette as recited in claim 15, further comprising:
a support formed at an end of the tape cassette opposite the dust door, said support being adjacent to the flange, wherein, when the projection is received by the flange, the tape reel is moved to abut the support, thereby assisting in the prevention of rotation.

17. The tape cassette as recited in claim 14, wherein the means for preventing rotation comprises:
a radiused cam arm formed inwardly on the dust door;
wherein the at least one planar flange's vertical movement is limited by the cam when the dust door is in the second, closed position.

18. The tape cassette as recited in claim 17, further comprising:
a support formed at an end of the tape cassette opposite the dust door, said support being adjacent to the flange, wherein, when the arm is received by the flange, the support limits the vertical movement of the flange.

19. The tape cassette as recited in claim 17, further comprising a unidirectional rib on the tape cassette lower flange and a unidirectional rib on the cassette base, each of which is a first height, and a space between the cam arm and the upper surface of the lower flange is less than twice the first height,
wherein one rib is prevented from passing over the other rib in one direction due to the flange being able to move only in the space.

20. The tape cassette as recited in claim 2, wherein
said leader clip includes a first cylindrical, solid member and a second cylindrical hollow, member, and
wherein an outer diameter of the first cylindrical member is greater than an inner diameter of the second cylindrical hollow member, said second cylindrical member being received by the means for receiving and the first cylindrical member being received in the second hollow cylindrical member.

21. The tape cassette as recited in claim 21, further comprising:
a plurality of means formed on the hub, each for receiving a respective leader clip.

22. The tape cassette as recited in claim 1, further comprising:
a dust door pivotable between a first closed position and a second, open position;
a spring attached between the dust door and the tape cassette, and positioned within the tape cassette, for normally biasing the dust door into the first closed position; and
an opening in the tape cassette allowing removal of the dust door spring from the tape cassette without opening the tape cassette.

23. The tape cassette as recited in claim 1, wherein each member is formed of styrene.

24. The tape cassette as recited in claim 1, wherein the integral spring includes a pivot button formed integrally thereon.

25. The tape cassette as recited in claim 1,wherein the cover includes a pivot button formed integrally thereon.

26. A tape cassette, comprising:
a cover;
a base to be mated to the cover;
a tape reel including a hub, a lower flange, and a leader clip; and
a reel leaf spring,
each formed of styrene.
